# EUROPÄISCHE PATENTSCHRIFT

(11) **EP 2 535 165 B1**
(45) Veröffentlichungstag und Bekanntmachung des Hinweises auf die Patenterteilung: **30.09.2015**
(21) Anmeldenummer: 12171574.2
(22) Anmeldetag: 12.06.2012
(51) Int. Cl.: B29C 47/62, B29C 47/40, B29C 47/60, B29C 47/64, B29C 47/08, A21C 1/06, A23P 1/12, B29B 7/48

(54) **Doppelschneckenextruder mit wellenförmigem Steg**
Twin screw extruder with wavy screw thread
Extrudeuse à double vis avec filetage ondulée

(30) Priorität: 16.06.2011 DE 102011051101
(43) Veröffentlichungstag der Anmeldung: 19.12.2012
(73) Patentinhaber: Hans Weber Maschinenfabrik GmbH, 96317 Kronach (DE)
(72) Erfinder: Vießmann, Rainer, 95326 Kulmbach (DE)
(74) Vertreter: Schaumburg & Partner Patentanwälte (GbR)

(56) Entgegenhaltungen:
- WO-A1-2008/075941
- DE-A1- 19 512 230
- FR-A5- 2 079 694
- JP-A- 56 095 662
- JP-A- 57 207 044
- JP-A- 2000 176 995
- JP-A- 2009 297 967
- US-A- 3 449 793
- US-A- 5 975 449

## Beschreibung

Die Erfindung betrifft einen Doppelschneckenextruder mit gegenläufig angetriebenen Extruderschnecken, wobei jede Extruderschnecke einen Kern und mindestens einen auf der Mantelfläche des Kerns schraubenförmig umlaufenden Steg hat, wobei der Steg eine Umfangfläche und zwei Flanken umfasst und zwischen benachbarten Stegwindungen ein Schneckengang ausgebildet ist.

Derartige Doppelschneckenextruder finden beispielsweise in der Kunststoffverarbeitung Verwendung. Sie können mit zylindrischen oder konischen Schnecken ausgeführt sein. Als Ausgangsmaterial für die Kunststoffverarbeitung dient üblicherweise Kunststoffgranulat oder -pulver, das auch aus mehreren unterschiedlichen Komponenten bestehen kann.

Die Extruderschnecken übernehmen den Transport des Kunststoffes, dessen Plastifizierung und das Durchmischen der Einzelkomponenten zu einer homogenen Masse. Je besser die Plastifizierung und Durchmischung des Kunststoffes bei vorgegebener Extruderschneckenlänge ist, desto höherwertigere Produkte können gefertigt werden.

Die DE 195 12 230 A1 beschreibt eine Doppelschraubenspindelpumpe mit zwei Schraubenspindeln zur Strukturbeeinflussung bei der Lebensmittelproduktion. Jede Schraubenspindel hat einem Kern und mindestens einen umlaufenden Steg. Zwischen zwei benachbarten Stegen ist ein Schneckengang ausgebildet. Jeder Steg weist zwei Flanken auf. In radialer Richtung variiert die Steghöhe der Flanken wellenförmig. Auf diese Weise erfolgt bei Rotation der Schraubenspindeln eine stegübergreifende Durchmischung z.B. des Brotteigs.

Die JP 56 095662 A beschreibt eine Extruderschnecke mit einem in Umlaufrichtung gestuften Steg, bei dem weder die Stegbreite noch der Schneckengang eine konstante Breite aufweist.

In der JP 2000 176995 A ist eine Extruderschnecke beschrieben, bei dem im Schneckengang auf dem Kern umlaufende Nocken ausgebildet sind, die den Boden des Schneckengangs zumindest auf einem Teil der Breite des Schneckenganges anheben und somit die Steghöhe verändern.

Die WO 2008/075941 Al zeigt einen Doppelschneckenextruder mit zwei kämmenden Extruderschnecken, wobei sich die Breite des Schneckenganges und/oder die Stegbreite über die Länge der Extruderschnecke ändern.

Die JP 2009 297967 A beschreibt einen Einschneckenextruder mit einer angetriebenen Extruderschnecke zum Extrudieren von Kunststoff. Die Extruderschnecke umfasst einen Steg, dessen Flanken in Umlaufrichtung gesehen einen zick-zack-förmigen Verlauf haben, wodurch quer zur Förderrichtung im Schneckengang ein Lagewechsel des zu plastifizierenden Kunststoffmaterials veranlasst wird. Die Breite der Schneckengänge ist klein, verglichen mit der Breite der Stege.

Es ist Aufgabe der Erfindung, einen Doppelschneckenextruder anzugeben, mit dem die Plastifizierung und Durchmischung des Kunststoffes bei gleicher Länge der Extruderschnecken verbessert werden kann.

Diese Aufgabe wird durch einen Doppelschneckenextruder mit zwei Extruderschnecken nach dem Anspruch 1 gelöst. Vorteilhafte Weiterbildungen sind in den abhängigen Ansprüchen genannt.

Durch die Wellenform der Stegflanken wird die Oberfläche jeder Extruderschnecke vergrößert und damit die Wärmeübertragung in den Kunststoff verbessert, wodurch eine bessere Plastifizierung des Kunststoffes erreicht wird. Ferner veranlasst die Wellenform der Flanken eine Bewegung des Kunststoffmaterials quer zur Förderrichtung im Schneckengang und erzwingt so einen Lagewechsel des zu plastifizierenden Materials der die Durchmischung des Materials verbessert. Durch Verwendung eines derartigen Doppelschneckenextruders kann eine größere Homogenisierung des Kunststoffes erreicht werden.

Vorteilhafte Ausführungsformen der erfindungsgemäßen Extruderschnecke sind in den Unteransprüchen angegeben.

Die Erfindung wird im Folgenden anhand eines Ausführungsbeispiels unter Bezugnahme auf die Figuren erläutert. Darin zeigen:
- Figur 1: eine schematische Darstellung eines Abschnitts einer einzelnen Extruderschnecke des erfindungsgemäßen Doppelschneckenextruders, und
- Figur 2: eine der Fig.1 entsprechende Darstellung zweier miteinander kämmender Extruderschnecken.

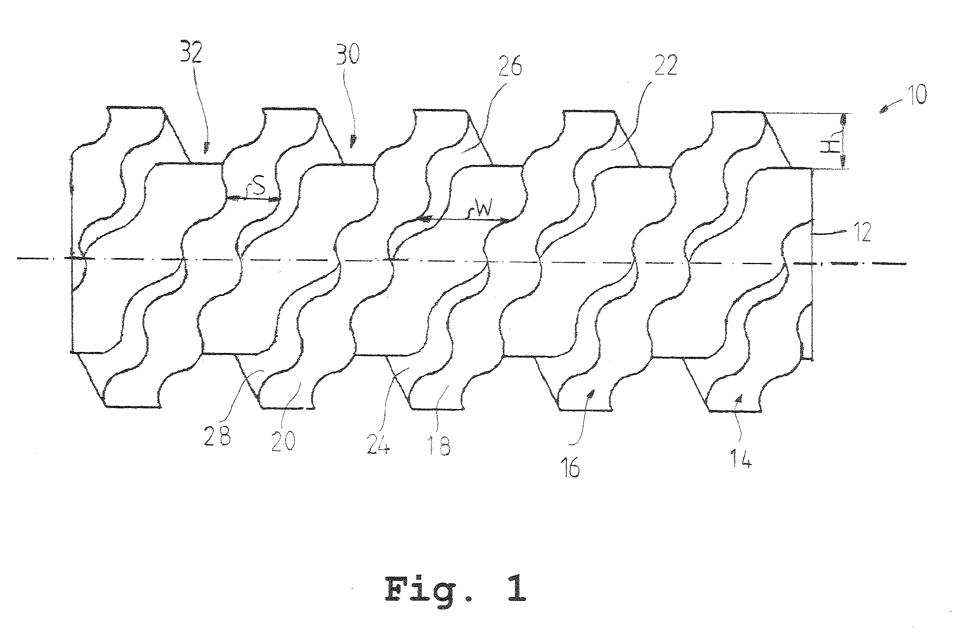

Figur 1 zeigt einen Abschnitt einer einzelnen Extruderschnecke 10, die hier als zweigängige Schnecke dargestellt ist. Um einen zylinderförmigen Kern 12 der Extruderschnecke 10 laufen im vorliegenden Ausführungsbeispiel zwei Stege 14, 16 mit jeweils einer Steghöhe H. Die Oberfläche jedes Steges 14 bzw. 16 setzt sich aus einer Umfangsfläche 18 bzw. 20 sowie zwei Flanken 22, 24 bzw. 26, 28 zusammen. Die Flanken 22 bis 28 der Stege 14, 16 sind in Umlaufrichtung wellenförmig ausgeführt. Die Flanken 22 bis 28 stehen senkrecht auf der Zylindermantelfläche des Kerns 12.

Die Wellenform kann unterschiedlich sein. Im vorliegenden Ausführungsbeispiel ist die Amplitude der Welle konstant und die Periodenlänge ist derart gewählt, dass ein Umlauf jedes Steges 14, 16 um den zylinderförmigen Kern 12 ein ganzzahliges Vielfaches der Periodenlänge der Welle beträgt. Des Weiteren ist die in axialer Richtung gemessene Breite S eines jeden Steges 14, 16 über den gesamten Stegverlauf konstant. Auch die in axialer Richtung gemessene Breite W der in Figur 1 mit 30, 32 bezeichneten Schneckengänge bleibt über den gesamten Spaltverlauf konstant. Die Breite der Schneckengänge 30, 32 ist größer als die Breite der Stege 14, 16.

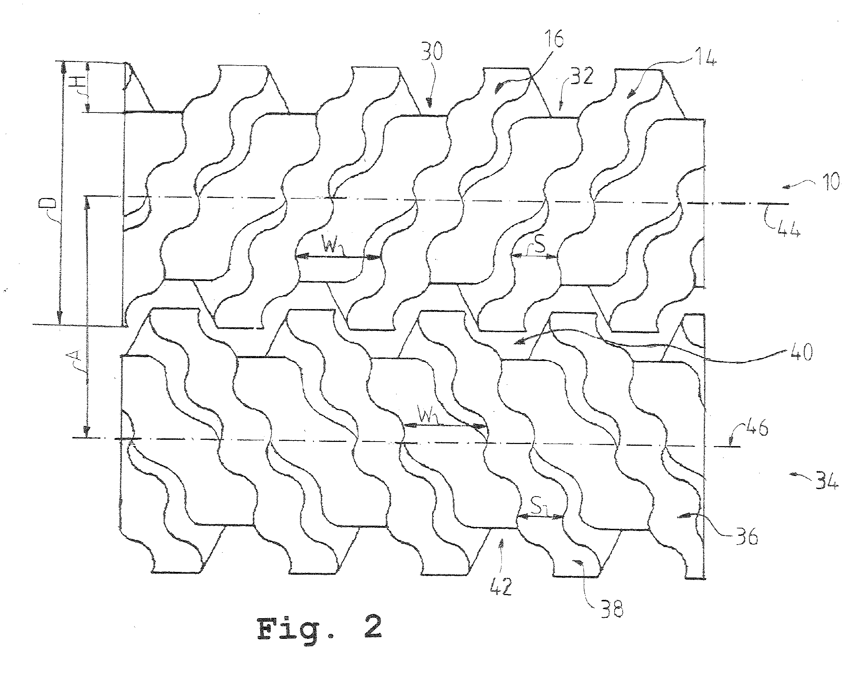

Figur 2 zeigt einen Ausschnitt zweier ineinander kämmender, erfindungsgemäßer Extruderschnecken 10, 34, wobei die Extruderschnecke 10 identisch mit der in Figur 1 gezeigten Extruderschnecke 10 ist. Die Extruderschnecken 10, 34 sind in einem Doppelschneckenextruder eingebaut und werden gegenläufig angetrieben. Der Doppelschneckenextruder ist im Übrigen herkömmlich aufgebaut und daher nicht näher dargestellt.

Wie in Figur 2 dargestellt, sind die Stege 14, 16 der Extruderschnecke 10 linksdrehend ausgeführt. Die den Stegen 14, 16 der Extruderschnecke 10 entsprechenden, in Figur 2 mit 36, 38 bezeichneten Stege der Extruderschnecke 34 sind dagegen rechtsdrehend ausgeführt. Ansonsten sind die beiden Extruderschnecken 10, 34 identisch aufgebaut. Damit weist auch die Extruderschnecke 34 Schneckengänge 40, 42 auf, deren Bereite W größer als die Stegbreite S der Stege 36, 38 ist.

Der jeweilige Schneckengang 30, 32, bzw. 40, 42 ist so bemessen, dass der gegenüberliegende Steg 36, 38, bzw. 14, 16 der jeweils anderen Extruderschnecke 34, 10 in diesen Schneckengang 30, 32, bzw. 40, 42 eingreifen kann, wenn der Abstand A der Drehachsen 44, 46 der Extruderschnecken 10, 34 geringer ist als der Durchmesser D der jeweiligen Extruderschnecken 10, 34.

Die Wellenform der Stege 14, 36, 38 bewirken, dass der Kunststoff innerhalb des Schneckenganges 40 quer bewegt wird und somit eine Lageänderung erfährt. Dadurch werden die einzelnen Komponenten des Kunststoffes besser durchmischt und gleichmäßiger plastifiziert. Außerdem wird durch die Wellenform der Stege 14, 16, 36, 38 die Oberfläche der Extruderschnecken 10, 34 vergrößert, wodurch eine bessere Wärmeübertragung zwischen den Extruderschnecken 10, 34 und dem zu plastifizierenden Kunststoff erreicht wird.

### Bezugszeichenliste

- 10: Extruderschnecke
- 12: Kern der Extruderschnecke
- 14: Steg
- 16: Steg
- 18: Umfangsseite
- 20: Umfangsseite
- 22: Flanke des Steges
- 24: Flanke des Steges
- 26: Flanke des Steges
- 28: Flanke des Steges
- 30: Schneckengang
- 32: Schneckengang
- 34: Extruderschnecke
- 36: Steg
- 38: Steg
- 40: Schneckengang
- 42: Schneckengang
- 44: Drehachse
- 46: Drehachse
- A: Abstand der Drehachsen der Extruderschnecke
- D: Durchmesser der Extruderschnecke
- H: Höhe eines Steges
- S: Breite des Steges
- W: Breite des Schneckenganges

## Patentansprüche

1. Doppelschneckenextruder mit gegenläufig angetriebenen Extruderschnecken (10, 34) zum Extrudieren von Kunststoff,
wobei jede Extruderschnecke einen Kern (12) und mindestens einen auf der Mantelfläche des Kerns (12) schraubenförmig umlaufenden Steg (14) hat,
wobei der Steg (14) eine Umfangsfläche (18) und zwei Flanken (22, 24) umfasst,
und wobei zwischen benachbarten Stegwindungen ein Schneckengang (30) ausgebildet ist, **dadurch gekennzeichnet, dass** die Flanken (22, 24) des schraubenförmig umlaufenden Steges (14) die Form einer in Umlaufrichtung laufenden Welle haben,
wobei die Wellenform der Flanken (22, 24) eine Bewegung des Kunststoffmaterials quer zur Förderrichtung im Schneckengang (30) veranlasst und so einen Lagewechsel des zu plastifizierenden Kunststoffmaterials zur verbesserten Durchmischung des Kunststoffmaterials erzwingt,
dass die Breite (W) des Schneckenganges (30) jeder Extruderschnecke (10, 34) gleichbleibend ist, und
**dass** bei einer Extruderschnecke (10) der Steg (14) rechtsdrehend und bei der anderen Extruderschnecke (34) der Steg (36) linksdrehend ausgeführt ist, dass die Breite (W) der Schneckengänge (30, 40) größer als die Stegbreite (S) der Stege (14, 36) ist und dass der Abstand der Drehachsen der Extruderschnecken (10, 34) geringer ist als der Durchmesser der Extruderschnecken (10, 34), sodass der Steg (14) einer Extruderschnecke (10) in den Schneckengang (40) der jeweils anderen Extruderschnecke (34) eingreift.

2. Doppelschneckenextruder nach Anspruch 1, **dadurch gekennzeichnet, dass** die Wellenform der Flanken (22, 24) zumindest in einzelnen Abschnitten jeder Extruderschnecke (10) periodisch ist.

3. Doppelschneckenextruder nach Anspruch 1 oder 2, **dadurch gekennzeichnet, dass** Periodenlänge und Amplitude der Wellenform zumindest in einzelnen Abschnitten jeder Extruderschnecke (10) konstant sind.

4. Doppelschneckenextruder nach einem der vorhergehenden Ansprüche, **dadurch gekennzeichnet, dass** der Kern (12) zylindrisch ist.

5. Doppelschneckenextruder nach einem der Ansprüche 1 bis 3, **dadurch gekennzeichnet, dass** der Kern konisch ist.

6. Doppelschneckenextruder nach einem der vorhergehenden Ansprüche, **dadurch gekennzeichnet, dass** die quer zu den Flanken gemessene Stegbreite (S) gleichbleibend ist.

7. Doppelschneckenextruder nach einem der vorhergehenden Ansprüche, **dadurch gekennzeichnet, dass** jede Extruderschnecke zweigängig ausgebildet ist.

## Claims

1. A twin screw extruder having extruder screws (10, 34) driven in opposite directions for the extrusion of plastic,
wherein each extruder screw has a core (12) and at least one web (14) running helically over the shell surface of the core (12),
wherein the web (14) comprises a peripheral surface (18) and two flanks (22,24),
and wherein between adjacent web windings a screw channel (30) is formed, **characterized in that** the flanks (22, 24) of the helically running web (14) have the shape of a wave running in the circumferential direction,
wherein the wave shape of the flanks (22, 24) induces movement of the plastic material transverse to the direction of conveyance in the screw channel (30) and thus forces a change in position of the plastic material to be plasticized in order to improve the mixing of the plastic material,
**in that** the width (W) of the screw channel (30) of each extruder screw (10, 34) is constant, and
**in that** on one extruder screw (10) the web (14) turns in a clockwise direction and on the other extruder screw (34) the web (36) turns in a counterclockwise direction, **in that** the width (W) of the screw channels (30, 40) is greater than the thread width (S) of the web (14, 36), and **in that** the distance between the axes of rotation of the extruder screws (10, 34) is smaller than the diameter of the extruder screws (10, 34), so that the web (14) of one extruder screw (10) engages in the channel (40) of the respective other extruder screw (34).

2. The twin screw extruder according to claim 1, **characterized in that** the wave shape of the flanks (22, 24) is periodical at least in individual portions of each extruder screw (10).

3. The twin screw extruder according to claim 1 or 2, **characterized in that** the period length and amplitude of the wave shape are constant at least in individual portions of each extruder screw (10).

4. The twin screw extruder according to one of the preceding claims, **characterized in that** the core (12) is cylindrical.

5. The twin screw extruder according to one of claims 1 to 3, **characterized in that** the core (12) is conical.

6. The twin screw extruder according to one of the preceding claims, **characterized in that** the web width (S) measured transversely to the flanks is constant.

7. The twin screw extruder according to one of the preceding claims, **characterized in that** each extruder screw is formed with a double thread.

## Revendications

1. Extrudeuse à double vis pourvue de deux vis (10, 34) entraînées dans des sens opposés et destinées à extruder une matière plastique,
chaque vis de l'extrudeuse présentant un noyau (12) et au moins un filetage (14) s'enroulant en spirale sur la surface du noyau (12),
le filetage (14) présentant une surface périphérique (18) et deux flancs (22, 24),
et un pas de vis (30) étant formé entre des spires voisines du filetage, **caractérisée en ce que** les flancs (22, 24) du filetage (14) s'enroulant en spirale présentent la forme d'une ondulation s'étendant dans la direction d'enroulement,
la forme ondulée des flancs (22, 24) amenant la matière plastique à se déplacer transversalement à la direction de transport dans le pas de vis ((30) et imposant ainsi un changement de position de la matière plastique à plastifier afin d'améliorer le mélange de la matière plastique,
**en ce que** la largeur (W) du pas de vis (30) de chaque vis (10, 34) de l'extrudeuse est constante, et
**en ce que** pour une vis (10) de l'extrudeuse, le filetage (14) tourne à droite et pour l'autre vis (34) de l'extrudeuse, le filetage (36) tourne à gauche, **en ce que** la largeur (W) des pas de vis (30, 40) est supérieure à la largeur (S) des filetages (14, 36) et **en ce que** l'écart entre les axes de rotation des vis (10, 34) de l'extrudeuse est inférieur au diamètre des vis (10, 34) de l'extrudeuse, de sorte que le filetage (14) d'une vis (10) de l'extrudeuse s'insère dans le pas de vis (40) de l'autre vis (34) de l'extrudeuse.

2. Extrudeuse à double vis selon la revendication 1, **caractérisée en ce que** la forme ondulée des flancs (22, 24) est périodique au moins dans différentes parties de chaque vis (10) de l'extrudeuse.

3. Extrudeuse à double vis selon la revendication 1 ou 2, **caractérisée en ce que** la longueur de période et l'amplitude de la forme ondulée sont constantes au moins dans différentes parties de chaque vis (10) de l'extrudeuse.

4. Extrudeuse à double vis selon l'une quelconque des revendications précédentes, **caractérisée en ce que** le noyau (12) est cylindrique.

5. Extrudeuse à double vis selon l'une quelconque des revendications 1 à 3, **caractérisée en ce que** le noyau est conique.

6. Extrudeuse à double vis selon l'une quelconque des revendications précédentes, **caractérisée en ce que** la largeur (S) du filetage mesurée transversalement aux flancs est constante.

7. Extrudeuse à double vis selon l'une quelconque des revendications précédentes, **caractérisée en ce que** chaque vis de l'extrudeuse présente deux pas.
